Europäisches Patentamt

European Patent Office

Office européen des brevets

(19)

(11) Veröffentlichungsnummer: **0 400 182**
**A1**

(12) **EUROPÄISCHE PATENTANMELDUNG**

(21) Anmeldenummer: **89109869.1**

(22) Anmeldetag: **31.05.89**

(51) Int. Cl.5: **H04N 1/18**

(43) Veröffentlichungstag der Anmeldung:
**05.12.90 Patentblatt 90/49**

(84) Benannte Vertragsstaaten:
**DE FR GB IT NL**

(71) Anmelder: **Siemens Aktiengesellschaft**
**Wittelsbacherplatz 2**
**D-8000 München 2(DE)**

(72) Erfinder: **Zibert, Klaus, Dipl.-Ing./Dr./Ing.**
**Kiem Pauistrasse 19**
**D-8150 Holzkirchen(DE)**

(54) **Interface-Schaltungsanordnung für grossflächige Bild-Sensorzeilen.**

(57) Interface-Schaltungsanordnung für großflächige Sensorzeilen bestehend aus mehreren Teil-Schaltungsanordnungen, die jeweils einen Analog-Multiplexer und einen Analog-Digital-Wandler enthalten und denen jeweils ein Registersatz nachgeschaltet ist. Hierbei können die Teilschaltungen möglichst nahe an den Sensorelementen angebracht werden, sodaß Analogsignale nur über sehr kurze Leitungsstücke geführt werden. Außerdem hat jeder Analog-Digital-Wandler nur eine relativ geringe Anzahl von Analogsignalen umzusetzen, sodaß keine allzu große Anforderung an die Arbeitsgeschwindigkeit dieser Analog-Digital-Wandler gestellt ist.

EP 0 400 182 A1

## INTERFACE -Schaltungsanordnung für großflächige Sensorzeilen

Die Erfindung betrifft eine INTERFACE-Schaltungsanordnung für großflächige Sensorzeilen nach dem Oberbegriff des Patentanspruches 1.

Solche Sensorzeilen werden beispielsweise als Bild-Sensorzeilen für kostengünstige, optische Abtastgeräte z.B. Scanner, Faxgeräte, Kopierer u.s.w. im Bereich der Büromaschinentechnik eingesetzt und sind unter anderem aus "DESIGN AND EVALUATION OF A HIGH SPEED AND HIGH RESOLUTION A4 AMORPHOUS Si HYBRID IMAGE SENSOR" IMC 1984 Proceedings, Tokyo, May 21-23, 1984 bekannt. In gleichem Maße betrifft die Erfindung jedoch auch eine Interface-Schaltungsanordnung für Röntgen-Sensorzeilen.

Eine Bild-Sensorzeile besteht zur Zeit aus einem linearen Array von ca. 12 - 16 Photodioden pro Millimeter. Ein solches Array ist üblicherweise so lang wie die abzutastende Seite breit ist. Bei einer DIN A4 Seite von 210 mm Breite ist es also 210 mm lang und enthält bei einem Einsatz von 16 Dioden pro Millimeter 3360 Abtastdioden. Die Abtastung einer Zeile sollte in marktgerechten Abtastgeräten in etwa 1 bis 2 ms erfolgen. Bei einer linearen Abtastung verbleibt dabei für eine Diode eine Verarbeitungszeit von ca. 500 ns. Zu dieser Zeitbedingung wird üblicherweise noch verlangt, daß jeder Abtastpunkt in 32 Grau-Stufen aufgelöst werden kann.

Der Artikel "DESIGN AN EVALUATION OF A HIGH SPEED AND HIGH RESOLUTION A4 AMORPHOUS Si HYBRID IMAGE SENSOR" von Suzuki e.a., IMC 1984 Proceedings, Tokyo, May 21-23 1984, Seiten 165 bis 168 beschreibt eine Bild-Sensorzeile mit einem Photodetektor Array von 216 mm Länge, bestehend aus 3456 Elementen und einer Interface-Schaltung, die aus 28 integrierten Schaltkreisen mit jeweils 128 Vorverstärkern besteht, wobei die vorverstärkten Spannungswerte der einzelnen Abtast-Dioden über entsprechende 128 Anologschalter-Transistoren im Zeitmultiplex-Verfahren auf einen zentralen Analog-Digital-Umsetzer geschaltet werden. Bei diesem Verfahren führen die Leitungen, die zwischen den 28, jeweils einen 128-Kanal analog Multiplexer enthaltenden integrierten Schaltkreisen und dem zentralen Analog-Digital-Wandler angeordnet sind, Analogsignale. Dies führt zu einem hohen Übersprechen auf diesen Leitungen. Außerdem erfordert eine solche Interface-Schaltungsanordnung einen Analog-Digital-Umsetzer mit einer hohen Arbeitsgeschwindigkeit, was üblicherweise nur mit hohem Schaltungsaufwand oder durch teuere Technologien realisiert werden kann. Ein Vorteil der bekannten Interface-Schaltung ist darin zu sehen, daß bei verschiedenen, unterschiedlich langen Bildsensorzeilen die Interface-Schaltung dadurch realisiert werden kann, daß eine unterschiedliche Anzahl integrierter Schaltkreise vom gleichen Typ entsprechend angeordnete wer den kann.

Aufgabe der vorliegenden Erfindung ist das Bereitstellen einer Interface-Schaltungsanordnung mit einem weniger aufwendigen Analog-Digital-Wandler und einem günstigeren Übersprech-Verhalten.

Diese Aufgabe wird erfindungsgemäß durch eine Schaltungsanordnung nach dem Patentanspruch 1 gelöst.

Besonders günstige Ausgestaltungsformen dieser Schaltungsanordnung sind Gegenstand von Unteransprüchen.

Der Kern der Erfindung ist hierbei darin zu sehen, daß die Interface-Schaltungsanordnung aus mehreren Teil-Schaltungsanordnungen besteht, daß jede dieser Teil-Schaltungsanordnungen einen Analog-Digital-Umsetzer enthält, daß jedem dieser Analog-Digital-Umsetzer ein Registersatz nachgeschaltet ist, wobei jeder Bitstelle das Analog-Digital-Umsetzers eine Bitstelle im Registersatz zugeordnet ist und die Registerinhalte in linearer Reihenfolge ausgelesen werden.

Die Anzahl der Bitstellen der einzelnen Analog-Digital-Umsetzer und ihrer nachgeschalteten Registersätze ist hierbei durch den Auflösungsgrad vorgegeben. Bei einer Auflösung von 32 Grauwerten sollte ein 5-bit-breiter Analog-Digital-Umsetzer vorgesehen sein. Die Anzahl der Register pro Registersatz wird durch die Anzahl der an den Eingang eines Analog-Digital-Umsetzers angeschlossenen Abtastdioden bestimmt. 64 oder 128 Abtastdioden pro Analog-Digital-Umsetzer haben sich hierbei als günstig erwiesen.

Durch den Einsatz solcher, monolithisch integrierbarer Teilschaltungen in einer Interface-Schaltungsanordnung kann die Analog-Digital-Umsetzung parallelisiert werden und somit die Anforderungen an die Geschwingkeit der einzelnen Analog-Digital-Umsetzer um eine hohen Faktor reduziert werden. Zudem werden die Analogsignale nur von der Sensorzeile zu den einzelnen Teilschaltungen über ca. 10 mm Länge geführt, wodurch das Übersprechen als wesentliches Problem der bisherigen InterfaceSchaltungsanordnungen nahezu vollkommen ausgeschaltet werden kann. Bei monolithischer Integration solcher Teilschaltungen vergrößert sich der Halbleiter-Flächenbedarf üblicherweise nicht, weil die Größe der benötigten Halbleiterfläche nahezu nur von der Anzahl der Anschlußklemmen abhängig ist.

Die für die Abtastung einer Zeile vorgesehene Zeit von beispielsweise 1 bis 2 ms steht bei Einsatz erfindungsgemäßer Interface-Schaltungsanordnungen für jede der parallel angeordneten Teil-Schaltungen zur Wandlung von beispielsweise 64 oder 128 analogen Abtastwerten zur Verfügung. Die gewandelten Werte werden dann in Register geschrieben und durch eine geeignete Steuerung danach in der linearen Reihenfolge ausgelesen. Die Register können als sogenannte dual port-Register ausgeführt sein oder aus zwei einfachen Registerbänken bestehen, die wechselnd beschrieben und gelesen werden.

Erfindungsgemäße Interface-Schaltungsanordnungen aus monolithisch integrierten Teil-Schaltungsanordnungen sind einerseits realisierbar in dem für jede Teilschaltungsanordnung ein eigener Halbleiter-Chip mit Anschlußklemmen vorgesehen wird, andererseits können die Teilsschaltungsanordnungen auch innerhalb einer großen Halbleiteranordnung entsprechend räumlich verteilt sein, daß sich die Vorteile der erfindungsgemäßen Interface-Schaltungsanordnung bemerkbar machen. Hierbei können die Teil-Schaltungsanordnungen sowohl in kristallinem als auch in amorphem Silizium realisiert sein. Eine günstige Ausgestaltung der Erfindung ist darin zu sehen, daß eine Sensorzeile und die erfindungsgemäße Interface-Schaltungsanordnung gemeinsam in amorphem Silizium realisiert sind, wobei Teil-Schaltungsanordnungen der Interface-Schaltungsanordnung derart angeordnet sind, daß die Leitungen, auf denen Analogsignale übertragen werden, entsprechend geringe Längenausdehnungen aufweisen.

Eine mögliche Ausführungsform der Erfindung sieht vor, daß Teil-Schaltungsanordnungen aus Vorverstärker, Analog-Multiplexer und Analog-Digital-Wandler jeweils in der Nähe der ihnen zugeordneten Sensorelemente angeordnet sind, evtl. in amorphem Silizium, und daß die den Analog-Digital-Wandlern nachgeschalteten Registersätze zentral angeordnet sind, daß also die längeren Leitungen auf der aus Sensorzeile und Teil-Schaltungsanordnungen bestehenden Halbleiteranordnung nur Digitalsignale führen.

Die Parallelisierung der Abtastung führt zu einer Abtastunschärfe. Dies läßt sich folgendermaßen erklären: In den nebeneinander liegenden Bausteinen der Breite b beginnt die Abtastung zum Zeitpunkt t und endet zum Zeitpunkt t + dt, wobei dt üblicherweise ca. 1 bis 2 ms beträgt. Die Transportbewegung führt dazu, daß die Sensorzeile relativ zum abgetasteten Bild bewegt wird und zwar in der Zeit dt um den Betrag a, der üblicherweise ca. 1/16 mm betragen kann. Dadurch entsteht eine sägezahnformige Abtastung mit einem Raster b bzw. b/2 und einer Höhe a, beispielsweise 1/16 mm, die linear abgebildet wird.

Dieser Abtastfehler kann durch zwei verschiedene Maßnahmen beseitigt werden. Zum einen kann eine Vorverzerrung der Sensor zeile dadurch erreicht werden, daß die Photodioden im Bausteinraster b sägezahnförmig angeordnet werden, zum anderen können die Bildpunkte in Rastertiefe a temporär zwischengespeichert werden und dann entsprechend gesteuert korrigiert ausgelesen werden.

Die Anzahl der zwischenzuspeichernden Zeilen ist hierbei von der Abtastgeschwindigkeit abhängig. Die Zwischenspeicherung kann in einem entsprechend großen Registersatz erfolgen, der entweder jedem Analog-Digital-Wandler räumlich benachbart angeordnet ist, oder der aus einem großen zentralen Registersatz besteht.

## Ansprüche

1. Interface-Schaltungsanordnung für großflächige Sensorzeilen, bestehend aus Analog-Multiplexer, Analog-Digital-Wandler und einer Datenausgabeschaltung
**dadurch gekennzeichnet,** daß die Interface-Schaltungsanordnung aus mehreren Teil-Schaltungsanordnungen besteht, daß jede dieser Teil-Schaltungsanordnungen einen Analog-Digital-Wandler enthält, daß den Analog-Digital-Wandlern ein Registersatz nachgeschaltet ist, wobei jeder Bit-Stelle der Analog-Digital-Wandler eine Bit-Stelle im Registersatz zugeordnet ist und die Registerinhalte in linearer Reihenfolge ausgelesen werden und daß die Teil-Schaltungsanordnungen räumlich nahe an den Sensorzeilen angeordnet sind.

2. Interface-Schaltungsanordnung nach Anspruch 1,
**dadurch gekennzeichnet,** daß jedem Analog-Digital-Wandler ein Registersatz räumlich zugeordnet ist.

3. Interface-Schaltungsanordnung nach Anspruch 1,
**dadurch gekennzeichnet,** daß den Analog-Digital-Wandlern ein zentraler Registersatz nachgeschaltet ist.

4. Interface-Schaltungsanordnung nach einem der vorhergehenden Ansprüche, **dadurch gekennzeichnet,** daß die Teil-Schaltungsanordnungen in amorphem Silizium ausgeführt sind.

5. Interface-Schaltungsanordnung nach einem der Ansprüche 1, 2 oder 3, **dadurch gekennzeichnet,** daß die Teil-Schaltungsanordnungen in kristallinem Silizium ausgeführt sind.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 019 777 (IBM) * Seite 11, Zeile 19 - Zeile 30 * --- | 1 | H 04 N 1/18 |
| A | EP-A-0 274 383 (Dainippon Screen) * Zusammenfassung; Spalte 4, Zeile 59 - Spalte 5, Zeile 1; Figur 3 * --- | 1 | |
| A | DE-A-3 633 190 (Siemens AG) * Spalte 2, Zeile 20 - Zeile 24 * --- | 1 | |
| A | DE-A-3 412 451 (Siemens AG) * Zusammenfassung; Figur 1 * ----- | 1 | |

**RECHERCHIERTE SACHGEBIETE (Int. Cl.5)**

H 04 N

Der vorliegende Recherchenbericht wurde für alle Patentansprüche erstellt

| Recherchenort | Abschlußdatum der Recherche | Prüfer |
|---|---|---|
| DEN HAAG | 31-01-1990 | ISA S. |